# FASCICULE DE BREVET EUROPEEN

(11) **EP 2 026 999 B1**
(45) Date de publication et mention de la délivrance du brevet: **28.09.2011**
(21) Numéro de dépôt: 07765350.9
(22) Date de dépôt: 11.06.2007
(51) Int. Cl.: B60S 1/38

(54) **PROCEDE DE FABRICATION D'UN BALAI D'ESSUIE-GLACE**
VERFAHREN ZUR HERSTELLUNG EINES SCHEIBENWISCHERBLATTES
METHOD FOR MANUFACTURING A WINDSHIELD WIPER BLADE

(30) Priorité: 14.06.2006 FR 0605272
(43) Date de publication de la demande: 25.02.2009
(73) Titulaire: Valeo Systèmes d'Essuyage, 78321 La Verrière (FR)
(72) Inventeur: GRASSO, Giuseppe, 63340 Le Breuil Sur Couze (FR); OLLIER, Nicolas, 43700 Arsac En Velay (FR)
(74) Mandataire: Rosolen-Delarue, Katell
(86) Numéro de dépôt international: PCT/EP2007/055693
(87) Numéro de publication internationale: WO 2007/144319

(56) Documents cités:
- WO-A-2005/118363
- DE-A1- 10 333 083
- DE-U1- 20 220 355
- FR-A1- 2 267 910
- FR-A1- 2 276 964
- US-A- 3 919 736

## Description

La présente invention concerne un procédé de fabrication d'un balai d'essuie-glace.

Elle s'applique typiquement, mais non exclusivement, au domaine des balais plats d'essuie-glace de véhicule automobile.

Le document WO-2005/118363 concerne un balai 1 plat d'essuie-glace, comme représenté sur la figure 1.

Ledit balai 1 comporte un élément de liaison 2 destiné au raccordement du balai plat à un bras d'essuie-glace, et deux éléments 3,4 de monture positionnés de part et d'autre de l'élément de liaison 2 et dans chacun desquels sont ménagés un logement 6 et un rail 7 de fixation parallèlement à l'axe longitudinal A-A dudit élément de monture 3,4.

Lesdits logement 6 et rail 7 communiquent respectivement avec un logement et un rail dudit élément de liaison 2.

Ledit balai 1 comprend en outre une vertèbre élastiquement déformable, traditionnellement métallique, disposée à l'intérieur des logements respectifs de l'élément de liaison et de chaque élément de monture 3,4, lesdits logements étant sensiblement alignés de manière continue, et une lame d'essuyage 9 en caoutchouc, comportant un talon emboîté à l'intérieur des rails respectifs de l'élément de liaison 2 et de chaque élément de monture 3,4, lesdits rails étant sensiblement alignés de manière continue.

Des moyens de verrouillage permettent d'immobiliser la vertèbre et la lame d'essuyage à l'intérieur des éléments de monture ensemble avec l'élément de liaison.

Dans un mode de réalisation, les moyens de verrouillage consistent en un écrasement de l'extrémité longitudinale externe du rail de chaque élément de monture.

Dans un autre mode de réalisation, les moyens de verrouillage sont pourvus d'une languette élastiquement déformable. Ladite languette est solidaire de l'élément de liaison et une partie saillante de ladite languette, s'étendant à l'intérieur du logement, est à même de coopérer par emboîtement avec une encoche ménagée le long de la vertèbre.

Dans un autre mode de réalisation, les moyens de verrouillage disposent d'une portion d'élément de monture qui est en mesure de se déformer localement et de coopérer par emboîtement avec un trou ménagé dans la vertèbre.

Le document WO-2005/108178 décrit un embout d'extrémité longitudinale d'un balai plat d'essuie-glace, destiné à être monté sur l'extrémité longitudinale avant d'une structure de support du balai.

La structure de support du balai comporte un unique élément de monture longitudinal et une vertèbre élastiquement déformable montée à l'intérieur de l'élément de monture.

Pour réaliser la fixation de la lame d'essuyage avec l'élément de monture, l'embout d'extrémité longitudinale comporte des moyens pour sa fixation à l'élément de monture et/ou à la vertèbre, et des moyens pour sa fixation à la lame d'essuyage.

Ledit embout d'extrémité longitudinale de balai d'essuie-glace comporte un corps creux ouvert recevant une extrémité longitudinale de la vertèbre, et des moyens de verrouillage de l'extrémité longitudinale de la vertèbre en position engagée dans le corps creux.

Une languette, réalisée dans la paroi latérale du corps creux comporte un ergot qui est reçu dans une encoche de la vertèbre pour le verrouillage longitudinal de la vertèbre en position engagée dans le logement cylindrique.

Cependant, les moyens de verrouillage ou de retenue de la vertèbre et de la lame d'essuyage à l'intérieur de l'élément de monture, qu'ils soient de type assemblage de pièces supplémentaires de fermeture tel qu'un embout d'extrémité longitudinale, déformation mécanique, clippage ou emboîtement, comme décrit dans l'état de la technique, sont fragiles et ne sont pas adaptés pour retenir de façon durable la vertèbre et la lame d'essuyage dans l'élément de monture.

L'invention vise à résoudre les problèmes de l'art antérieur en proposant un procédé facile à mettre en oeuvre et peu onéreux permettant de retenir la vertèbre et la lame d'essuyage à l'intérieur du ou des éléments de monture présents ensemble avec l'élément de liaison, et ayant une fiabilité et une résistance optimisées.

A cet effet, l'invention a pour objet un procédé de fabrication d'un balai d'essuie-glace pour véhicule automobile, le balai comportant au moins un élément de monture dans lequel un logement et un rail de fixation sont ménagés parallèlement à l'axe longitudinal dudit élément de monture, une vertèbre élastiquement déformable disposée à l'intérieur dudit logement de l'élément de monture, et une lame d'essuyage, comportant un talon emboîté à l'intérieur dudit rail de l'élément de monture, le procédé comprenant l'étape de déformation à chaud d'au moins une extrémité longitudinale de l'élément de monture, afin d'immobiliser longitudinalement ladite vertèbre et ladite lame d'essuyage, respectivement à l'intérieur dudit logement et dudit rail de l'élément de monture.

Grâce à l'invention, le procédé permet de garantir de façon fiable l'arrêt de la vertèbre et de la lame d'essuyage aux extrémités longitudinales d'un balai d'essuie-glace, sans ajouter de pièces supplémentaires auxdites extrémités longitudinales.

De plus, lesdites extrémités longitudinales permettent d'éviter la pénétration de l'eau dans le logement de la vertèbre métallique tout en offrant un maintien durable de la vertèbre et de la lame d'essuyage agencés à l'intérieur des éléments de monture ensemble avec l'élément de liaison.

Dans un exemple particulier, la déformation à chaud est une déformation par fonte de ladite extrémité longitudinale, de préférence par soudure ultrason, fusion par contact ou soufflage d'air chaud.

Dans un autre exemple particulier, la déformation à chaud est une déformation par apport de matière à ladite extrémité longitudinale, de préférence par soudure thermoplastique.

Selon un mode de réalisation particulièrement intéressant, le procédé comprend en outre l'étape, préalable à l'étape de déformation à chaud, de découpe de ladite extrémité longitudinale de l'élément de monture, de manière à obtenir une extrémité longitudinale non saillante, après la fonte de ladite extrémité longitudinale.

Cette étape de découpe permet d'obtenir des extrémités longitudinales de balai plat d'essuie-glace non agressives pour répondre aux exigences de réglementation concernant la sécurité.

De plus, lorsque l'étape de découpe est effectuée au préalable, le recours à de nombreux outillages pour retoucher les extrémités longitudinales saillantes est évité et le procédé conformément à l'invention s'avère particulièrement peu onéreux.

Dans un exemple particulier, l'extrémité longitudinale est découpée selon un plan de coupe formant un angle aigu avec la face horizontale inférieure de l'élément de monture, de préférence ledit angle aigu est sensiblement égal à 70°.

Les qualificatifs « horizontal » et « inférieur » sont précisés dans la suite de la présente invention.

Selon un autre mode de réalisation, le procédé comprend en outre une étape, supplémentaire à l'étape de déformation à chaud, de mise en forme de l'extrémité longitudinale déformée à chaud.

La mise en forme desdites extrémités longitudinales par conformation à l'aide d'un outillage de forme adapté permet d'obtenir des extrémités longitudinales non agressives tout en conservant un esthétisme général agréable.

La présente invention concerne également un balai d'essuie-glace pour véhicule automobile susceptible d'être obtenu par le procédé selon l'invention, le balai d'essuie-glace comportant au moins une extrémité longitudinale déformée à chaud.

D'autres caractéristiques et avantages de la présente invention apparaîtront à la lumière des exemples qui vont suivre en référence aux dessins annotés, lesdits exemples et dessins étant donnés à titre illustratif et nullement limitatif.

Pour des raisons de clarté, seuls les éléments essentiels pour la compréhension de l'invention ont été représentés, et ceci sans respect de l'échelle.
La figure 1 illustre en perspective latérale un balai d'essuie-glace plat, selon l'art antérieur.
La figure 2A est un éclaté en perspective latérale un balai d'essuie-glace plat, selon le procédé conformément à l'invention comprenant deux éléments de monture.
La figure 2B est un éclaté en perspective latérale un balai d'essuie-glace plat, selon le procédé conformément à l'invention comprenant un unique élément de monture.
La figure 3 illustre en perspective latérale les figures 2A ou 2B non éclatées.
La figure 4 illustre en perspective une extrémité longitudinale d'un balai d'essuie-glace plat, sans lame d'essuyage, avant la mise en oeuvre du procédé conformément à l'invention.
La figure 5 représente une vue simplifiée schématique de face du balai plat de la figure 4 avec une lame d'essuyage.
La figure 6 représente une vue schématique de face du balai plat de la figure 5, après l'étape de découpe, selon le procédé conformément à l'invention.
La figure 7 représente une vue schématique de face du balai plat de la figure 6, après l'étape de déformation à chaud et de mise en forme, selon le procédé conformément à l'invention.
La figure 8 illustre en perspective une extrémité longitudinale du balai d'essuie-glace plat de la figure 7, selon le procédé conformément à l'invention.

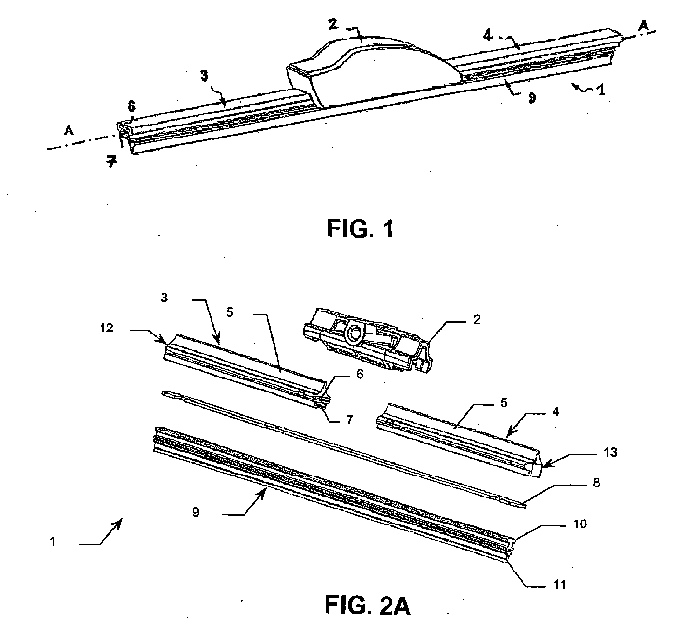

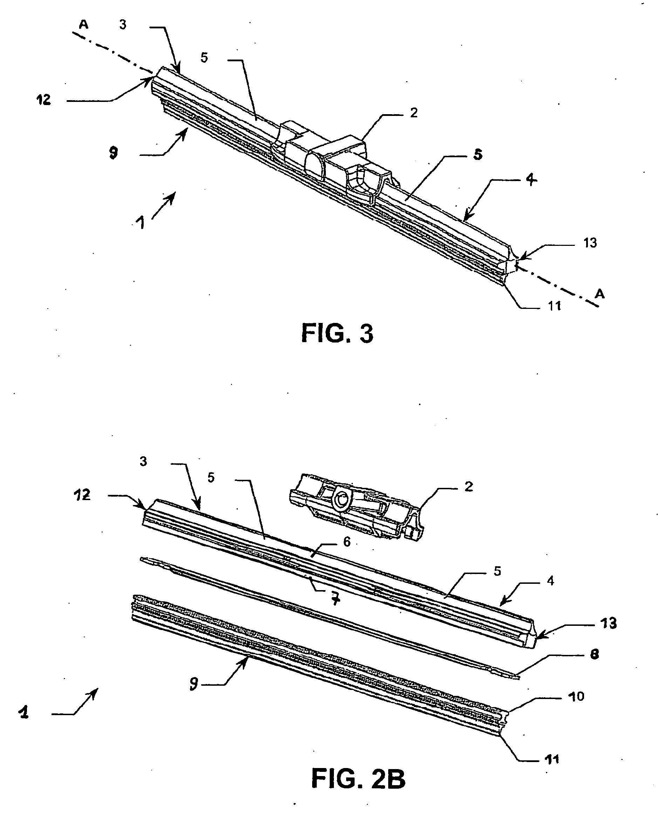

Les figures 2A, 2B et 3 illustrent un mode de réalisation d'un balai d'essuie-glace plat 1, destiné à équiper un dispositif d'essuie-glace de véhicule automobile, selon le procédé conformément à la présente invention.

Selon les figures 2A et 2B, le balai plat 1 est doté d'un élément de liaison 2, destiné au raccordement du balai plat 1 au dispositif d'essuie-glace de véhicule automobile (non représenté).

Comme représenté à la figure 2A, le balai plat 1 comporte deux éléments de monture 3,4 en matière plastique qui sont positionnés de part et d'autre de l'élément de liaison 2.

Les qualificatifs « supérieur », « inférieur » et « horizontal » sont définis dans la présente invention par rapport au positionnement d'un balai d'essuie-glace tel que représenté sur les figures 1 à 8.

Selon un mode de réalisation répandu des balais d'essuie-glace plat, les éléments de monture 3,4 sont conformés aérodynamiquement de manière à ce que le vent relatif généré lors du déplacement du véhicule produise un effort de pression du balai sur la vitre à essuyer, et comportent une paroi supérieure concave 5.

Chaque élément de monture 3,4 est pourvu d'un logement 6 et d'un rail 7. ouverts à leurs deux extrémités longitudinales.

Lesdits logement 6 et rail 7 sont tous deux ménagés parallèlement à l'axe longitudinal A-A de chaque élément de monture 3,4.

L'élément de liaison 2 est également pourvu d'un logement et d'un rail.

Le balai plat 1 comporte une vertèbre 8 élastiquement déformable, de préférence métallique disposée à l'intérieur du logement de l'élément de liaison 2 et du logement 6 de chaque élément de monture 3,4.

Le balai plat 1 est également doté d'une lame d'essuyage 9 comportant un talon 10 et étant pourvue d'une lèvre 11 destinée à coopérer directement par contact glissant avec toute surface à essuyer.

Le talon 10 de la lame d'essuyage 9 est emboîté à l'intérieur du rail de l'élément de liaison 2 et du rail 7 de chaque élément de monture 3,4.

Comme représenté sur la figure 3, l'ensemble est agencé de manière à ce que, lorsque le balai plat 1 est assemblé, le logement 6 et le rail 7 de chaque élément de monture 3,4 communiquent respectivement avec le logement et le rail de l'élément de liaison 2.

Lesdits logements d'une part de l'élément de liaison 2 et d'autre part des éléments de montures 3,4 sont alignés de manière continue, de même que lesdits rails d'une part de l'élément de liaison 2 et d'autre part des éléments de montures 3,4.

Dans la variante représentée à la figure 2B, le balai plat 1 comporte un unique élément de monture en matière plastique formée de deux parties 3,4 positionnées de part et d'autre de l'élément de liaison 2 une fois celui-ci mis en place sur le balai plat 1. Dans ce cas, l'élément de liaison 2 vient se positionner par correspondance de forme sur l'élément de monture et l'enserre, grâce à des moyens connus, pour obtenir la tenue nécessaire.

Après assemblage du balai 1 d'essuie-glace et selon le procédé conformément à l'invention, les deux extrémités longitudinales 12,13 dudit balai 1 sont déformées à chaud, plus particulièrement l'extrémité longitudinale 12 de l'élément de monture 3, et l'extrémité longitudinale 13 de l'élément de monture 4, opposées à l'élément de liaison 2.

Ladite déformation à chaud permet de faire fondre la matière plastique de l'extrémité longitudinale 12,13 de l'élément de monture 3,4, et plus particulièrement, de faire fondre la matière plastique des parois du logement 6 et du rail 7 de ladite extrémité longitudinale 12,13.

Après refroidissement de la matière fondue, ladite extrémité longitudinale 12,13 du logement 6 et du rail 7 est obstruée par ladite matière fondue.

La vertèbre 8 et le talon 10 de la lame d'essuyage 9 sont alors immobilisés longitudinalement dans le balai 1 d'essuie-glace, plus particulièrement dans les éléments de monture 3,4 ensemble avec l'élément de liaison 2.

Ce mode de réalisation est décrit ci-après plus précisément.

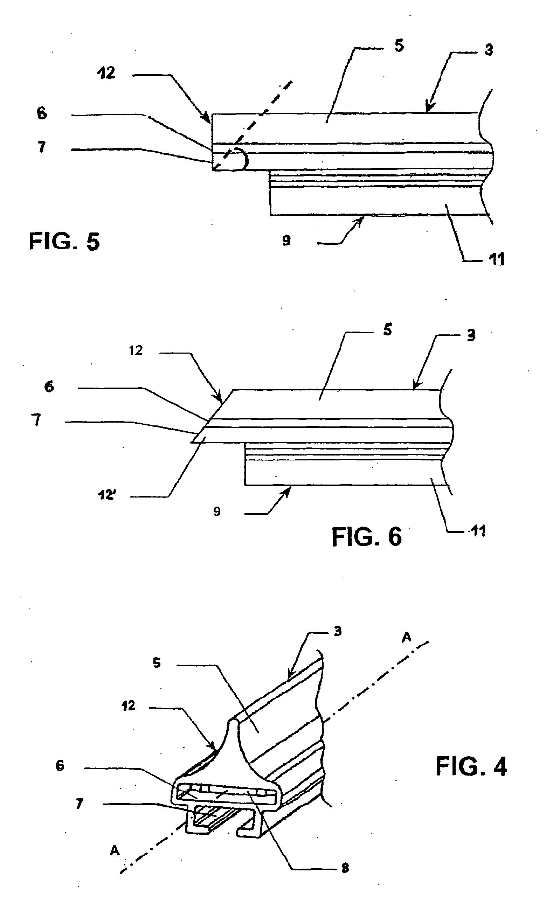

La figure 4 illustre en perspective une extrémité longitudinale 12 d'un balai 1 d'essuie-glace plat, avant la mise en oeuvre du procédé selon l'invention.

L'extrémité longitudinale 12 du balai 1 comporte un élément de monture 3 en matière plastique surmonté d'une paroi concave 5, une vertèbre métallique 8, élastiquement déformable, et une lame d'essuyage (non représentée).

La vertèbre métallique 8 est disposée à l'intérieur du logement 6 de l'élément de monture 3.

La lame d'essuyage (non représenté) est emboîtée à l'intérieur du rail 7 de l'élément de monture 3.

Conformément à l'invention et selon la figure 5, l'extrémité longitudinale 12 subit une étape de découpe.

L'extrémité longitudinale 12 est ainsi découpée selon un plan de coupe formant un angle aigu avec la face horizontale inférieure de l'élément de monture 3.

Plus particulièrement, la face de l'extrémité longitudinale 12, perpendiculaire à l'axe longitudinal A-A de l'élément de monture 3, est découpée selon un plan de coupe formant un angle aigu avec la face horizontale inférieure de l'élément de monture 3.

L'angle aigu est de préférence sensiblement égale à 70°.

L'extrémité longitudinale 12 de l'élément de monture 3, ainsi obtenue après découpe, présente un surplus de matière 12', que l'on peut également qualifié de subsistance de matière 12', comme représenté sur la figure 6.

Le surplus de matière 12' est fondu par soudure ultrason, fusion par contact ou soufflage d'air chaud en positionnant l'outillage de déformation à chaud en regard dudit surplus de matière 12', dans un plan perpendiculaire à l'axe longitudinal A-A de l'élément de monture 3.

Le surplus de matière 12', constitué principalement des parois du logement 6 et du rail 7, obstrue en fondant le logement 6 et le rail 7 de l'élément de monture 3.

Après refroidissement, le surplus de matière 12' fondue immobilise longitudinalement la vertèbre 8 et la lame d'essuyage 9 respectivement à l'intérieur dudit logement 6 et dudit rail 7 au niveau de ladite extrémité longitudinale 12.

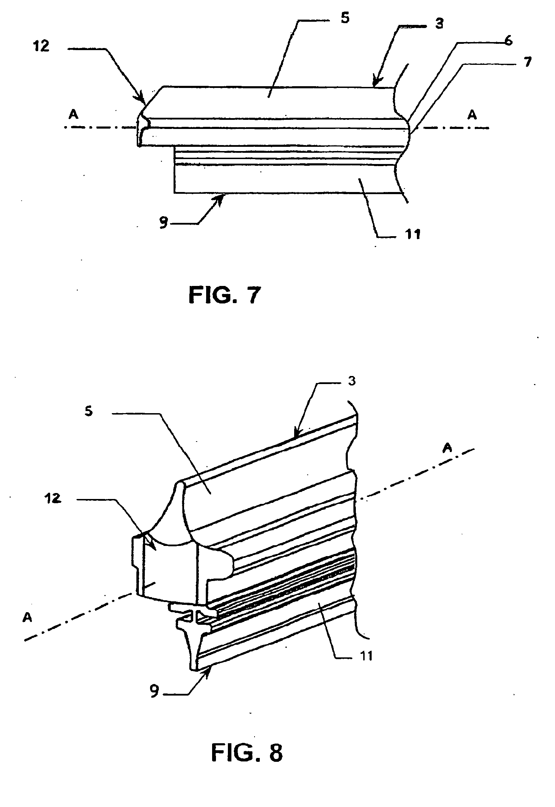

Les figures 7 et 8 illustrent l'extrémité longitudinale 12 de l'élément de monture 3 une fois la mise en forme réalisée conformément à l'invention, après l'étape de déformation à chaud.

La mise en forme de l'extrémité longitudinale 12 est réalisée à l'aide d'un outillage adapté tel qu'un moule de forme appliqué en regard de ladite extrémité longitudinale 12, dans un plan perpendiculaire à l'axe longitudinal A-A de l'élément de monture 3.

L'extrémité longitudinale 12 de l'élément de monture 3 ainsi obtenue présente une forme symétrique, arrondie et non agressive, et notamment, la paroi supérieure concave 5 de ladite extrémité longitudinale 12 n'est pas saillante.

Le procédé conformément à l'invention permet ainsi de répondre aux exigences de réglementation concernant la sécurité.

De plus, l'extrémité longitudinale 12 obtenue selon le procédé conformément à l'invention conserve un esthétisme général agréable.

La présente invention n'est pas limitée à l'exemple de mise en oeuvre du procédé qui vient d'être décrit et porte dans sa généralité sur tous les procédés envisageables à partir des indications générales fournies dans l'exposé de l'invention.

Notamment, la déformation à chaud des extrémités longitudinales d'un balai d'essuie glace peut être une déformation par apport de matière auxdites extrémités longitudinales, de préférence par soudure thermoplastique.

## Revendications

1. Procédé de fabrication d'un balai (1) d'essuie-glace pour véhicule automobile, le balai comportant :
- au moins un élément de monture (3,4) d'orientation longitudinale dans lequel un logement (6) et un rail (7) de fixation sont ménagés parallèlement à l'axe longitudinal (A-A) dudit élément de monture (3,4),
- une vertèbre (8) élastiquement déformable disposée à l'intérieur dudit logement (6) de l'élément de monture (3,4), et
- une lame d'essuyage (9), comportant un talon (10) emboîté à l'intérieur dudit rail (7) de l'élément de monture (3,4),
**caractérisé en ce que** le procédé comprend l'étape de :
- déformation à chaud d'au moins une extrémité longitudinale (12,13) de l'élément de monture (3,4), afin d'immobiliser longitudinalement ladite vertèbre (8) et ladite lame d'essuyage (9), respectivement à l'intérieur dudit logement (6) et dudit rail (7) de l'élément de monture (3,4).

2. Procédé selon la revendication 1, **caractérisé en ce que** la déformation à chaud est une déformation par fonte de ladite extrémité longitudinale (12,13), de préférence par soudure ultrason, fusion par contact ou soufflage d'air chaud.

3. Procédé selon la revendication 1, **caractérisé en ce que** la déformation à chaud est une déformation par apport de matière à ladite extrémité longitudinale (12,13), de préférence par soudure thermoplastique.

4. Procédé selon l'une quelconque des revendications 1 à 4, **caractérisé en ce que** le procédé comprend en outre l'étape, préalable à l'étape de déformation à chaud, de :
- découpe de ladite extrémité longitudinale (12,13) de l'élément de monture (3,4), de manière à ne pas obtenir une extrémité longitudinale saillante, après la fonte de ladite extrémité longitudinale.

5. Procédé selon la revendication 4, **caractérisé en ce que** l'extrémité longitudinale (12,13) est découpée selon un plan de coupe formant un angle aigu avec la face horizontale inférieure de l'élément de monture (3,4).

6. Procédé selon la revendication 5, **caractérisé en ce que** ledit angle aigu est sensiblement égal à 70°.

7. Procédé selon l'une quelconque des revendications 1 à 6, **caractérisé en ce que** le procédé comprend en outre une étape, supplémentaire à l'étape de déformation à chaud, de :
- mise en forme de l'extrémité longitudinale (12,13) déformée à chaud.

8. Balai d'essuie-glace pour véhicule automobile susceptible d'être obtenu par le procédé selon l'une quelconque des revendications 1 à 7, **caractérisé en ce que** le balai (1) d'essuie-glace comporte au moins une extrémité longitudinale (12,13) déformée à chaud.

## Claims

1. A method for producing a windshield wiper blade (1) for a motor vehicle, with the wiper blade including:
- at least one mounting element (3, 4) having a longitudinal orientation, wherein a recess (6) and a fixing rail (7) are provided parallel to the longitudinal axis (A-A), of said mounting element (3, 4),
- an elastically deformable vertebra (8) positioned inside said recess (6) of the mounting element (3, 4), and
- a wiping blade (9) including a heel (10) fitted inside said rail (7) of the mounting element (3, 4),
**characterized in that** the method includes the step of:
- heat distortion of at least one longitudinal end (12, 13) of the mounting element (3, 4), so as to longitudinally immobilize said vertebra (8) and said wiping blade (9), respectively inside said recess (6) and said rail (7) of said mounting element (3, 4).

2. A method according to claim 1, **characterized in that** the heat distortion is a deformation by melting said longitudinal end (12, 13), preferably by ultrasonic sealing, contact fusion or hot air blowing.

3. A method according to claim 1, **characterized in that** the heat distortion is a deformation by deposition of material at said longitudinal end (12, 13), preferably by thermoplastic welding.

4. A method according to any one of claims 1 to 3, **characterized in that** said method further includes the step, which comes prior to the heat distortion, of:
- cutting said longitudinal end (12, 13) of the mounting element (3, 4), so as not to obtain a protruding longitudinal end, after the melting of said longitudinal end.

5. A method according to claim 4, **characterized in that** the longitudinal end (12, 13) is cut along a cutting plane forming an acute angle with the lower horizontal face of the mounting element (3, 4).

6. A method according to claim 5, **characterized in that** said acute angle is substantially equal to 70°.

7. A method according to any one of claims 1 to 6, **characterized in that** the method further includes a step, which is additional to the step of heat distortion, of:
- shaping the heat-deformed longitudinal end (12, 13).

8. A windscreen wiper blade for a motor vehicle liable to be obtained with the method according to any one of claims 1 to 7, **characterized in that** the windscreen wiper blade (1) includes at least one heat-deformed longitudinal end (13, 14).

## Patentansprüche

1. Herstellungsverfahren eines Scheibenwischerarms (1) für ein Automobil, wobei der Arm Folgendes umfasst:
- wenigstens ein Fassungselement (3, 4) länglicher Ausrichtung, in dem eine Aufnahme (6) und eine Befestigungsschiene (7) parallel zur Längsachse (A-A) des genannten Fassungselements (3, 4) ausgespart sind,
- ein elastisch verformbares Glied (8), das im Innern der genannten Aufnahme (6) des Fassungselements (3, 4) angeordnet ist und
- ein Wischblatt (9), das einen Absatz (10) umfasst, der im Innern der genannten Schiene (7) des Fassungselements (3, 4) eingerastet ist,
**dadurch gekennzeichnet, dass** das Verfahren die folgende Stufe umfasst:
- Heißverformung wenigstens eines länglichen Endes (12, 13) des Fassungselements (3, 4), um das genannte Glied (8) und das genannte Wischblatt (9) in Längsrichtung jeweils im Innern der genannten Aufnahme (6) und der genannten Schiene (7) des Fassungselements (3, 4) festzustellen.

2. Verfahren gemäß Anspruch 1, **dadurch gekennzeichnet, dass** die Heißverformung eine Verformung per Verschmelzen des genannten länglichen Endes (12, 13), bevorzugt per Ultraschallverschweißen, Verschmelzen per Kontakt oder Heißluftgebläse ist.

3. Verfahren gemäß Anspruch 1, **dadurch gekennzeichnet, dass** die Heißverformung eine Verformung per Eintrag von Material in das genannte längliche Ende (12, 13), bevorzugt per thermoplastischem Verschweißen, ist.

4. Verfahren gemäß Anspruch 1 bis 4, **dadurch gekennzeichnet, dass** das Verfahren darüber hinaus die folgende Stufe vor der Stufe der Heißverformung umfasst:
- Nach dem Schmelzen des genannten länglichen Endes Ausschneiden des genannten länglichen Endes (12, 13) aus dem Fassungselement (3, 4), so dass kein hervorstehendes längliches Ende erhalten wird.

5. Verfahren gemäß Anspruch 4, **dadurch gekennzeichnet, dass** das längliche Ende (12, 13) gemäß einer Schnittebene ausgeschnitten wird, die mit der unteren horizontalen Seite des Fassungselements (3, 4) einen spitzen Winkel bildet.

6. Verfahren gemäß Anspruch 5, **dadurch gekennzeichnet, dass** der genannte spitze Winkel deutlich gleich 70°, ist

7. Verfahren gemäß Anspruch 1 bis 6, **dadurch gekennzeichnet, dass** das Verfahren darüber hinaus eine zu der Stufe der Heißverformung zusätzliche Stufe umfasst zur:
- Formgebung des länglichen Endes (12, 13), das heiß verformt wird.

8. Scheibenwischerarm für ein Automobil, der geeignet ist, durch ein Verfahren gemäß Anspruch 1 bis 7 hergestellt zu werden, **dadurch gekennzeichnet, dass** der Scheibenwischerarm (1) wenigstens ein heiß verformtes längliches Ende (12, 13) umfasst.
